# EUROPEAN PATENT APPLICATION

(11) **EP 4 827 088 A1**
(43) Date of publication of application: **21.10.2026**
(21) Application number: 24902408.4
(22) Date of filing: 30.10.2024
(51) Int. Cl.: H04N 19/146, H04N 21/2662

(54) **VIDEO BITRATE CALCULATION METHOD AND SYSTEM**

(30) Priority: 14.12.2023 CN 202311726192
(71) Applicant: Alipay (Hangzhou) Information Technology Co., Ltd., Hangzhou, Zhejiang 310000 (CN)
(72) Inventor: YANG, Jianxing, Hangzhou, Zhejiang 310000 (CN)
(74) Representative: Winter, Brandl - Partnerschaft mbB
(86) International application number: PCT/CN2024/128640
(87) International publication number: WO 2025/123984

(57) **Abstract**

Embodiments of this specification disclose a video bitrate calculation method and system. The method includes: obtaining a frame rate and a bitrate that are of a source video, and obtaining a frame rate of a target video; calculating a mapping frame rate of the target video according to the frame rate of the source video and the frame rate of the target video; and calculating a first bitrate of the target video according to the mapping frame rate of the target video and the frame rate and the bitrate that are of the source video. The system includes: a frame rate and bitrate obtaining module, configured to: obtain a frame rate and a bitrate that are of a source video, and obtain a frame rate of a target video; a mapping frame rate calculation module, configured to calculate a mapping frame rate of the target video according to the frame rate of the source video and the frame rate of the target video; and a first bitrate calculation module, configured to calculate a first bitrate of the target video according to the mapping frame rate of the target video and the frame rate and the bitrate that are of the source video

## Description

### TECHNICAL FIELD

Embodiments of this specification mainly relate to the field of video processing technologies, and in particular, to a video bitrate calculation method and system.

### BACKGROUND

A bitrate (Bitrate) refers to a quantity of bits transmitted per second in digital audio or a digital video. The bitrate represents a data transmission rate of an audio file or a video file, and is usually expressed in bits per second (bps). A definition needs to be ensured during video production, and the bitrate is a key to ensure a definition of a produced video. Before a video is produced, a bitrate of a to-be-produced video needs to be first determined according to a resolution of the to-be-produced video.

For a streaming scenario (directly recording a video), only several fixed resolutions are usually used. For example, a resolution is 320*240 pixels, 640*360 pixels, 854*480 pixels, 1280*720 pixels, 1920*1080 pixels, or 3840*2160 pixels. Therefore, when a bitrate is determined, generally, only a fixed bitrate needs to be obtained according to resolution mapping (a bitrate corresponding to a resolution has been determined in advance). For example, when a resolution is 1280*720 pixels, a corresponding bitrate is 2 Mbps. When a resolution is 1920*1080 pixels, a corresponding bitrate is 6 Mbps.

However, for a stream pulling scenario (producing a target video based on a source video), a resolution of the target video is not fixed but may be any value. For example, the resolution may be any value such as 888*666 pixels, 777*555 pixels, or 333*222 pixels. Bitrates corresponding to the resolutions cannot be determined in advance. Therefore, it is very difficult to determine the bitrate according to the resolution in a single mapping manner.

### SUMMARY

According to a first aspect, an embodiment of this specification provides a video bitrate calculation method, including: obtaining a frame rate and a bitrate that are of a source video, and obtaining a frame rate of a target video; calculating a mapping frame rate of the target video according to the frame rate of the source video and the frame rate of the target video; and calculating a first bitrate of the target video according to the mapping frame rate of the target video and the frame rate and the bitrate that are of the source video.

According to a second aspect, an embodiment of this specification provides a video bitrate calculation system, including: a frame rate and bitrate obtaining module, configured to: obtain a frame rate and a bitrate that are of a source video, and obtain a frame rate of a target video; a mapping frame rate calculation module, configured to calculate a mapping frame rate of the target video according to the frame rate of the source video and the frame rate of the target video; and a first bitrate calculation module, configured to calculate a first bitrate of the target video according to the mapping frame rate of the target video and the frame rate and the bitrate that are of the source video.

According to a third aspect, an embodiment of this specification provides an electronic device, including: a memory, configured to store the program; a processor, configured to run a program stored in the memory, to perform the video bitrate calculation method according to the first aspect.

According to a fourth aspect, an embodiment of this specification provides a computer-readable storage medium, having computer program instructions are stored therein, wherein the computer program instructions, when performed by a processor, implement the video bitrate calculation method according to the first aspect.

In the video bitrate calculation method and system in the embodiments of this specification, a bitrate of a target video is calculated in a frame rate dimension. When the bitrate of the target video is calculated, a corresponding mapping frame rate of the target video is first calculated through a frame rate of the target video, and then a required bitrate of the target video is calculated through the mapping frame rate of the target video. The bitrate calculated in this manner does not significantly decrease based on a source video bitrate in a linear manner, but slowly decreases based on the source video bitrate in a non-linear positive correlation manner, so that poor quality of a produced target video caused by insufficient calculated bitrates may be avoided.

Further or more detailed beneficial effects are described in specific implementations with reference to specific embodiments.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may derive other accompanying drawings from these accompanying drawings without creative efforts.
FIG. 1 is a schematic flowchart of a video bitrate calculation method according to Embodiment 1 of this specification.
FIG. 2 is a schematic diagram of a low-level frame rate curve, a middle-level frame rate curve, a high-level frame rate curve, and a mapping frame rate curve according to Embodiment 1 of this specification.
FIG. 3 is a schematic flowchart of a video bitrate calculation method according to Embodiment 2 of this specification.
FIG. 4 is a schematic flowchart of a video bitrate calculation method according to Embodiment 3 of this specification.
FIG. 5 is a schematic flowchart of a video bitrate calculation method according to Embodiment 4 of this specification.
FIG. 6 is a schematic flowchart of a video bitrate calculation method according to Embodiment 5 of this specification.
FIG. 7 is a schematic diagram of a structure of a video bitrate calculation system according to Embodiment 6 of this specification.
FIG. 8 is a schematic diagram of a structure of a video bitrate calculation system according to Embodiment 7 of this specification.
FIG. 9 is a schematic diagram of a structure of a video bitrate calculation system according to Embodiment 8 of this specification.
FIG. 10 is a schematic diagram of a structure of a video bitrate calculation system according to Embodiment 9 of this specification.
FIG. 11 is a schematic diagram of a structure of a video bitrate calculation system according to Embodiment 10 of this specification.
FIG. 12 is a schematic diagram of a structure of an electronic device according to Embodiment 11 of this specification.

### DETAILED DESCRIPTION

The following clearly and completely describes technical solutions in the embodiments of this specification with reference to the accompanying drawings in the embodiments of this specification.

In the specification, claims, and accompanying drawings of this specification, terms "first", "second", "third", and so on are intended to distinguish between different objects rather than describe a specific sequence. In addition, terms "include", "have" and any variants thereof are intended to cover a non-exclusive inclusion. For example, a process, method, system, product, or device that includes a series of steps or units is not limited to listed steps or units, but optionally further includes a step or unit that is not listed, or optionally further includes another step or unit inherent to the process, method, product, or device.

In the video bitrate calculation method in this embodiment of this specification, only for a stream pulling scenario of video generation (generating a target video based on a source video), a resolution and a frame rate that are of a target video (namely, a to-be-generated video) need to be first determined before a video is generated. After the resolution and the frame rate of the target video are determined, a frame rate of a source video is determined. If the frame rate of the source video is less than or equal to the frame rate of the target video, another method needs to be used to calculate a bitrate of the target video. The method for calculating a video bitrate in this embodiment of this specification may be used only when the frame rate of the source video is greater than the frame rate of the target video.

### Embodiment 1

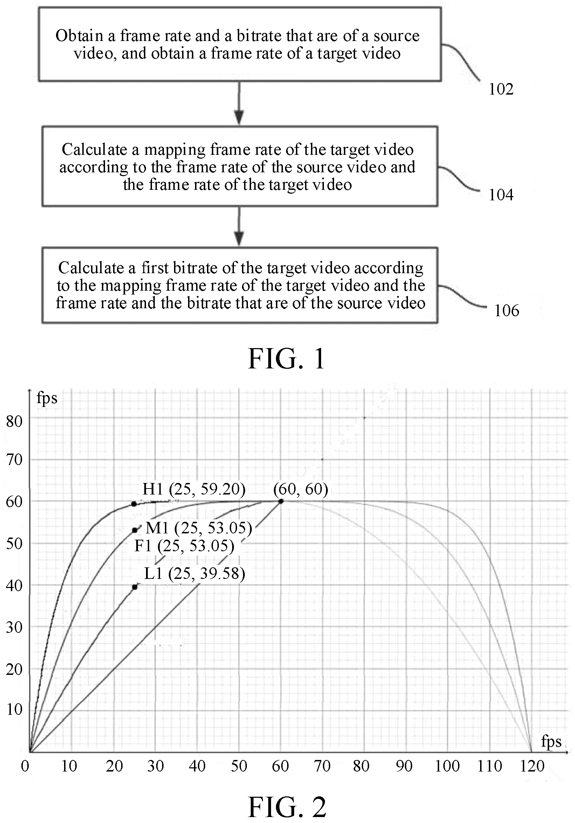

As shown in FIG. 1, a video bitrate calculation method includes step 102 to step 106.

Step 102: Obtain a frame rate and a bitrate that are of a source video, and obtain a frame rate of a target video.

In this embodiment, it is assumed that a resolution of the source video is 1920*1080 pixels, the frame rate is 60 fps, and the bitrate is 6 Mbps. A resolution of the target video is 888*666 pixels, and the frame rate is 25 fps.

In this step, the frame rate and the bitrate, namely, 60 fps and 6 Mbps, that are of the source video are first obtained, and the frame rate, namely, 25 fps, of the target video is obtained.

Step 104: Calculate a mapping frame rate of the target video according to the frame rate of the source video and the frame rate of the target video.

In this step, the mapping frame rate of the target video is calculated by using the following formulas: $L 1 = 2 ∗ x 1 - \frac{x {1}^{2}}{E 1}$ (1); $M 1 = 2 ∗ L 1 - \frac{L {1}^{2}}{E 1}$ (2); $H 1 = 2 ∗ M 1 - \frac{M {1}^{2}}{E 1}$ (3); and $F 1 = \left\{\begin{matrix}L 1 + 2 ∗ d ∗ \left(M1-L1\right) , d < 0.5 \\ M 1 + 2 ∗ \left(d-0.5\right) \left(H1-M1\right) , d \geq 0.5\end{matrix}\right.$ (4).

*x*1 is the frame rate of the target video, *E*1 is the frame rate of the source video, L1 is a low-level frame rate, M1 is a middle-level frame rate, H1 is a high-level frame rate, d is a bitrate level coefficient of the target video, and *F*1 is the mapping frame rate of the target video.

With reference to step 102, in this embodiment, *x*1 is 25 fps, and *E*1 is 60 fps. *d* is the bitrate level coefficient of the target video, and a value range of *d* is greater than or equal to 0 and less than or equal to 1. The bitrate level coefficient d is manually set by a user according to a desired bitrate level of the target video. If the user wants to have a higher bitrate of the target video, the bitrate level coefficient may be set to a value greater than 0.5, for example, the bitrate level coefficient d may be set to 0.6. If the user wants a lower bitrate of the target video, the bitrate level coefficient may be set to a value less than 0.5, for example, the bitrate level coefficient d may be set to 0.4. If the user does not want to have a higher or lower bitrate of the target video, the user may not consider the bitrate level coefficient d, and the bitrate level coefficient d is directly set to 0.5. In this embodiment, it is assumed that the bitrate level coefficient d is directly set to 0.5.

In this embodiment, the mapping frame rate F1 that is of the target video and that corresponds to the frame rate *x*1 of the target video is obtained by using the formula (1) to the formula (4). The formula (1) is a curve (namely, a low-level frame rate curve L1) formed by an oblique straight line passing through a point (0, 0) and a point (E1, E1) and protruding toward the upper left of the oblique straight line. The formula (2) is also a curve (namely, a middle-level frame rate curve M1) formed by an oblique straight line passing through the point (0, 0) and the point (E1, E1) and protruding toward the upper left of the oblique straight line. A protruding amplitude of the middle-level frame rate curve M1 is greater than a protruding amplitude of the low-level frame rate curve L1. The formula (3) is also a curve (namely, a high-level frame rate curve H1) formed by an oblique straight line passing through the point (0, 0) and the point (E1, E1) and protruding toward the upper left of the oblique straight line. A protruding amplitude of the high-level frame rate curve H1 is greater than the protruding amplitude of the middle-level frame rate curve M1. The formula (4) is obtained by combining the formula (1) to the formula (3), and actually is also a curve (namely, a mapping frame rate curve F1) formed by an oblique straight line passing through the point (0, 0) and the point (E1, E1) and protruding toward the upper left of the oblique straight line. A protruding amplitude of the mapping frame rate curve F1 needs to be determined according to the bitrate level coefficient *d.* When the value of *d* is 0.5, the protruding amplitude of the mapping frame rate curve F1 is the same as the protruding amplitude of the middle-level frame rate curve M1; when the value of *d* is less than 0.5, the protruding amplitude of the mapping frame rate curve F1 is between the protruding amplitude of the middle-level frame rate curve M1 and the protruding amplitude of the low-level frame rate curve L1; and when the value of *d* is greater than 0.5, the protruding amplitude of the mapping frame rate curve F1 is between the protruding amplitude of the middle-level frame rate curve M1 and the protruding amplitude of the high-level frame rate curve H1.

With reference to this embodiment, when E1 is 60 fps, the low-level frame rate curve L1, the middle-level frame rate curve M1, and the high-level frame rate curve H1 are determined. Details are shown in FIG. 2. In this embodiment, because the value of *d* is 0.5, the mapping frame rate curve F1 coincides with the middle-level frame rate curve M1. In other words, after the frame rate of the source video *E*1 and the bitrate level coefficient d are determined, the formula (1) to the formula (4) are determined. In this case, only the frame rate x1 of 25 fps of the target video needs to be input into the formula (1), and L1 is calculated by using the formula (1) is 39.58 fps. Then, L1 of 39.58 fps is input into the formula (2), and *M*1 that is calculated by using the formula (2) is 53.05 fps. Then, *M*1 of 53.05 fps is input into the formula (3), and that H1 that is calculated by using the formula (3) is 59.19 fps. Finally, according to the low-level frame rate L1, the middle-level frame rate *M*1, the high-level frame rate *H*1, the bitrate level coefficient of the target video d and the formula (4), the mapping frame rate *F*1 of 53.05 fps that is of the target video and that corresponds to the frame rate *x*1 of the target video is calculated.

In this embodiment, the formula (1) to the formula (4) for calculating the mapping frame rate *F*1 of the target video are obtained by the inventor by first obtaining appropriate curves, namely, the low-level frame rate curve L1, the middle-level frame rate curve M1, the high-level frame rate curve H1, and the mapping frame rate curve F1, through a large number of experiments and finally fitting the corresponding curves. In other words, the formula (1) is obtained by fitting the low-level frame rate curve L1, the formula (2) is obtained by fitting the middle-level frame rate curve M1, the formula (3) is obtained by fitting the high-level frame rate curve H1, and the formula (4) is obtained by fitting the mapping frame rate curve F1.

Step 106: Calculate a first bitrate of the target video according to the mapping frame rate of the target video and the frame rate and the bitrate that are of the source video.

In this step, the first bitrate of the target video is calculated by using the following formula: $Y 1 = F 1 ∗ \frac{A 1}{E 1}$ (5).

Y1 is the first bitrate of the target video, *F*1 is the mapping frame rate of the target video, *A*1 is the bitrate of the source video, and *E*1 is the frame rate of the source video.

With reference to step 102 and step 104, *F*1 is 53.05 fps, *A*1 is 6 Mbps, and *E*1 is 60 fps. In this step, Y1 that is calculated by using the formula (5) is 5.31 Mbps. In this embodiment, the first bitrate is directly used as a final bitrate to be calculated for the target video. In other words, in this embodiment, the finally determined bitrate of the target video is 5.31 Mbps.

In this embodiment, when the first bitrate *Y*1 is calculated, the first bitrate Y1 is not directly calculated by using the bitrate *A*1 of the source vide, the frame rate *E*1 of the source video, and the frame rate *x*1 of the target video (the bitrate calculated in this manner is 2.5 Mbps, and calculation is directly performed by using the frame rate x1 of the target video, causing the first bitrate to be significantly reduced in a linear manner based on the bitrate A 1 of the source video). Instead, the frame rate x1 of the target video is first mapped to the appropriate mapping frame rate *F*1 of the target video, and then the first bitrate *Y*1 is calculated by using the bitrate *A*1 of the source vide, the frame rate *E*1 of the source video, and the mapping frame rate *F*1 of the target video. The first bitrate calculated in this manner is slowly reduced in a non-linear positive correlation manner based on the bitrate *A*1 of the source video. Further, a case in which the first bitrate of the target video is not sufficient (further affecting production quality of the target video) because the first bitrate of the target video is significantly reduced in the linear manner when the bitrate of the source video is not high can be avoided.

In this embodiment, a bitrate of the target video (namely, the first bitrate of the target video) is calculated in a frame rate dimension. When the first bitrate of the target video is calculated, the corresponding mapping frame rate of the target video is first calculated by using the frame rate of the target video, and then the required first bitrate of the target video is calculated by using the mapping frame rate of the target video. The first bitrate calculated in this manner is not significantly reduced in a linear manner based on the bitrate of the source video, but is slowly reduced in a non-linear positive correlation manner based on the bitrate of the source video, so that relatively poor quality of the produced target video caused by the insufficient first bitrate obtained through calculation can be avoided. In other words, in this embodiment, the first bitrate of the target video is calculated in the frame rate dimension, so that the produced target video has relatively good quality.

### Embodiment 2

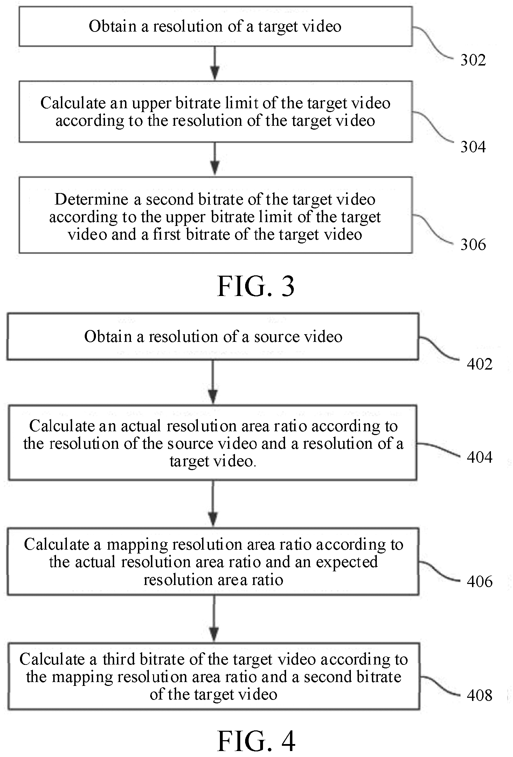

Based on Embodiment 1, as shown in FIG. 3, the video bitrate calculation method further includes step 302 to step 306.

Step 302: Obtain a resolution of the target video.

The resolution of the source video is 1920* 1080 pixels, the frame rate is 60 fps, and the bitrate is 6 Mbps. The resolution of the target video is 888*666 pixels, and the frame rate is 25 fps.

In this step, the resolution, namely, 888*666 pixels, of the target video is first obtained.

Step 304: Calculate an upper bitrate limit of the target video according to the resolution of the target video.

The upper bitrate limit of the target video is calculated by using the following formula: $Ymax = 4 ∗ 3.29 ∗ W 1 ∗ G 1$ (6).

*Ymax* is the upper bitrate limit of the target video, W1 is a width value of the resolution of the target video, and *G*1 is a height value of the resolution of the target video.

"4" in the formula (6) is a multiple of the upper bitrate limit. The inventor finds, through a large number of experiments and researches, that "4" is a better multiple of the upper bitrate limit. Therefore, in this embodiment, the multiple of the upper bitrate limit is directly set to "4". "3.29" in the formula (6) is a pixel bitrate middle range value. The inventor finds, through a large number of experiments and researches, that "3.29" is a better pixel bitrate middle range value. Therefore, in this embodiment, the pixel bitrate middle range value is directly set to "3.29".

In this step, the width value of the resolution of the target video and the height value of the resolution of the target video are first determined by using the resolution of the target video. Because the resolution of the target video in this embodiment is 888*666 pixels, the width value W1 of the resolution of the target video that may be obtained is 888, and the height value *G*1 of the resolution of the target video is 666. Further, the upper bitrate limit *Ymax* of the target video that can be calculated is 7782929 bps (namely, 7.42 Mbps).

Step 306: Determine a second bitrate of the target video according to the upper bitrate limit of the target video and the first bitrate of the target video.

The second bitrate of the target video is determined by using the following formula: $Y 2 = \left\{\begin{matrix}Y 1 , Y 1 < Ymax \\ Ymax , Y 1 \geq Ymax\end{matrix}\right.$ (7).

Y2 is the second bitrate of the target video, *Y*1 is the first bitrate of the target video, and *Ymax* is the upper bitrate limit of the target video.

It can be learned from Embodiment 1 that, the first bitrate *Y*1 of the target video is 5.31 Mbps. In this embodiment, the upper bitrate limit *Ymax* of the target video is 7.42 Mbps. The first bitrate *Y*1 of the target video and the upper limit bitrate *Ymax* of the target video are substituted into the formula (7). Because the first bitrate *Y*1 of the target video is less than the upper limit bitrate *Ymax* of the target video, it is finally determined that the second bitrate *Y2* of the target video is equal to the first bitrate of the target video, that is, the second bitrate Y2 of the target video is 5.31 Mbps.

If the bitrate of the source video is seriously excessively large, the first bitrate *Y*1 of the target video obtained In Embodiment 1 may also be excessively large. Consequently, the target video that is subsequently produced is excessively large (an adverse effect such as an excessively long uploading time of the target video is further generated). Therefore, in this embodiment, the upper bitrate limit *Ymax* of the target video needs to be limited. When the first bitrate Y1 of the target video is less than the upper bitrate limit *Ymax* of the target video, the first bitrate *Y*1 of the target video continues to be used (namely, the first bitrate *Y*1 of the target video is directly used as the second bitrate Y1 of the target video). When the first bitrate *Y*1 of the target video is greater than or equal to the upper bitrate limit *Ymax* of the target video, the first bitrate *Y*1 of the target video does not continue to be used, and the upper bitrate limit *Ymax* of the target video is directly used (namely, the upper bitrate limit *Ymax* of the target video is directly used as the second bitrate Y1 of the target video).

In this embodiment, the bitrate of the target video (namely, the second bitrate of the target video) continues to be calculated in an upper bitrate limit dimension. The upper bitrate limit of the target video is first calculated by using the resolution of the target video, and then the second bitrate of the target video is determined by using the upper bitrate limit of the target video and the first bitrate of the target video. The second bitrate calculated in this manner is not excessively large, so that the produced target video is not excessively large (a phenomenon such as an excessively long uploading time of the target video is avoided), thereby indirectly improving production quality of the target video. In other words, in this embodiment, the second bitrate of the target video is calculated in two dimensions, that is, the frame rate and the upper bitrate limit, so that the produced target video has better quality.

### Embodiment 3

Based on Embodiment 2, as shown in FIG. 4, the video bitrate calculation method further includes step 402 to step 408.

Step 402: Obtain a resolution of the source video.

The resolution of the source video is 1920*1080 pixels, the frame rate is 60 fps, and the bitrate is 6 Mbps. The resolution of the target video is 888*666 pixels, and the frame rate is 25 fps.

In this step, the resolution, namely, 1920* 1080 pixels, of the source video needs to be obtained. In addition, in Embodiment 2, the resolution, namely, 888*666 pixels, of the target video has been obtained.

Step 404: Calculate an actual resolution area ratio according to the resolution of the source video and the resolution of the target video.

The actual resolution area ratio is calculated by using the following formula: $x 2 = \frac{W 1 ∗ G 1}{W 2 ∗ G 2}$ (8).

x2 is the actual resolution area ratio, *W*1 is a width value of the resolution of the target video, *G*1 is a height value of the resolution of the target video, *W*2 is a width value of the resolution of the source video, and G2 is a height value of the resolution of the source video.

In this step, the width value of the resolution of the target video and the height value of the resolution of the target video are first determined by using the resolution of the target video. Because the resolution of the target video in this embodiment is 888*666 pixels, the width value W1 of the resolution of the target video that may be obtained is 888, and the height value *G*1 of the resolution of the target video is 666. Then, the width value of the resolution of the source video and the height value of the resolution of the source video are determined by using the resolution of the source video. Because the resolution of the source video in this embodiment is 1920*1080 pixels, the width value W2 of the resolution of the source video that may be obtained is 1920, and the height value *G*2 of the resolution of the source video is 1080. *W*1 of 888, *G*1 of 666, *W*2 of 1920, and *G*2 of 1080 are substituted into the formula (8), and the actual resolution area ratio x2 that may be calculated is 0.29.

Step 406: Calculate a mapping resolution area ratio according to the actual resolution area ratio and an expected resolution area ratio.

When the actual resolution area ratio is less than 1, the mapping resolution area ratio is calculated by using the following formulas: $L 2 = 2 ∗ x 2 - \frac{x {2}^{2}}{E 2}$ (9); $M 2 = 2 ∗ L 2 - \frac{L {2}^{2}}{E 2}$ (10); $H 2 = 2 ∗ M 2 - \frac{M {2}^{2}}{E 2}$ (11); and $F 2 = \left\{\begin{matrix}L 2 + 2 ∗ d ∗ \left(M2-L2\right) , d < 0.5 \\ M 2 + 2 ∗ \left(d-0.5\right) \left(H2-M2\right) , d \geq 0.5\end{matrix}\right.$ (12).

*x2* is the actual resolution area ratio, *E*2 is the expected resolution area ratio, *L*2 is a low-level resolution area ratio, *M2* is a middle-level resolution area ratio, *H2* is a high-level resolution area ratio, d is a bitrate level coefficient of the target video, and *F*2 is the mapping resolution area ratio.

Because the frame rate of the source video is greater than the frame rate of the target video, generally, the resolution of the source video is also greater than the resolution of the target video. In addition, when a plurality of source videos are available for selection, a source video whose frame rate and resolution are greater than the frame rate and the resolution that are of the target video is also preferentially selected as a final source video. Therefore, in most cases, the actual resolution area ratio is less than 1. If a special case in which the actual resolution area ratio is greater than or equal to 1 occurs, the following formula is used for calculation: $F 2 = \sqrt[1.2]{x 2}$ (21).

x2 is the actual resolution area ratio, and F2 is the mapping resolution area ratio.

In this embodiment, the actual resolution area ratio x2 is 0.29, and is less than 1. Therefore, the mapping resolution area ratio corresponding to the actual resolution area ratio x2 is obtained by using the formula (9) to the formula (12). Same as a principle of the frame rate curve in Embodiment 1, the formula (9) in this embodiment is a curve (namely, a low-level resolution area ratio curve L2) formed by an oblique straight line passing through the point (0, 0) and a point (E2, E2) and protruding toward the upper left of the oblique straight line. The formula (10) is also a curve (namely, a middle-level resolution area ratio curve M2) formed by an oblique straight line passing through the point (0, 0) and the point (E2, E2) and protruding toward the upper left of the oblique straight line. A protruding amplitude of the middle-level resolution area ratio curve M2 is greater than a protruding amplitude of the low-level resolution area ratio curve L2. The formula (11) is also a curve (namely, a high-level resolution area ratio curve H2) formed by an oblique straight line passing through the point (0, 0) and the point (E2, E2) and protruding toward the upper left of the oblique straight line. A protruding amplitude of the high-level resolution area ratio curve H2 is greater than the protruding amplitude of the middle-level resolution area ratio curve M2. The formula (12) is obtained by combining the formula (9) to the formula (11), and actually is also a curve (namely, a mapping resolution area ratio curve F2) formed by an oblique straight line passing through the point (0, 0) and the point (E2, E2) and protruding toward the upper left of the oblique straight line. A protruding amplitude of the mapping resolution area ratio curve F2 needs to be determined according to a value of the bitrate level coefficient *d.* When the value of *d* is 0.5, the protruding amplitude of the mapping resolution area ratio curve F2 is the same as the protruding amplitude of the middle-level resolution area ratio curve M2; when the value of *d* is less than 0.5, the protruding amplitude of the mapping resolution area ratio curve F2 is between the protruding amplitude of the middle-level resolution area ratio curve M2 and the protruding amplitude of the low-level resolution area ratio curve L2; and when the value of *d* is greater than 0.5, the protruding amplitude of the mapping resolution area ratio curve F2 is between the protruding amplitude of the middle-level resolution area ratio curve M2 and the protruding amplitude of the high-level resolution area ratio curve H2.

The expected resolution area ratio *E*2 in this embodiment is directly set to "1". After the value of E2 is determined, the low-level resolution area ratio curve L2, the middle-level resolution area ratio curve *M2,* and the high-level resolution area ratio curve *H2* are determined. Moreover, because in this embodiment, the value of *d* is 0.5, the mapping resolution area ratio curve F2 coincides with the middle-level resolution area ratio curve M2. In other words, after the expected resolution area ratio *E*2 and the bitrate level coefficient d are determined, the formula (9) to the formula (12) are determined. In this case, only the actual resolution area ratio x2 of 0.29 needs to be first input into the formula (9), and L2 that is calculated by using the formula (9) is 0.5. Then, *L2* of 0.5 is input into the formula (10), and *M2* that is calculated by using the formula (10) is 0.75. Then, *M2* of 0.75 is input into the formula (11), and *H2* that is calculated by using the formula (11) is 0.94. Finally, according to the low-level resolution area ratio *L2,* the middle-level resolution area ratio *M2,* the high-level resolution area ratio *H2,* the bitrate level coefficient d of the target video, and the formula (12), the mapping resolution area ratio F2 corresponding to the actual resolution area ratio x2 that is calculated is 0.75.

Step 408: Calculate a third bitrate of the target video according to the mapping resolution area ratio and the second bitrate of the target video.

The third bitrate of the target video is calculated by using the following formula: $Y 3 = F 2 ∗ Y 2$ (13).

*Y3* is the third bitrate of the target video, F2 is the mapping resolution area ratio, and Y2 is the second bitrate of the target video.

It can be learned from Embodiment 2 that, the second bitrate Y2 of the target video is 5.31 Mbps. In this step, the second bit rate Y2 of 5.31 Mbps of the target video and the mapping resolution area ratio F2 of 0.75 are substituted into the formula (13), and the third bitrate *Y3* of the target video that may be calculated is 3.98 Mbps.

In this embodiment, a bitrate of the target video (namely, the third bitrate of the target video) continues to be calculated in a resolution area ratio dimension. The resolution area ratio is first calculated by using the resolution of the target video and the resolution of the source video, then the mapping resolution area ratio is calculated by using the resolution area ratio and the expected resolution area ratio, and finally the third bitrate of the target video is calculated by using the mapping resolution area ratio and the second bitrate of the target video. The third bitrate calculated in this manner not only considers the frame rate and upper bitrate limit dimensions, but also considers the resolution area ratio dimension, so that the calculated bitrate is better, and further, the produced target video has better quality. In other words, in this embodiment, the third bitrate of the target video is calculated in three dimensions, namely, the frame rate, the upper bitrate limit, and the resolution area ratio, so that the produced target video has better quality.

### Embodiment 4

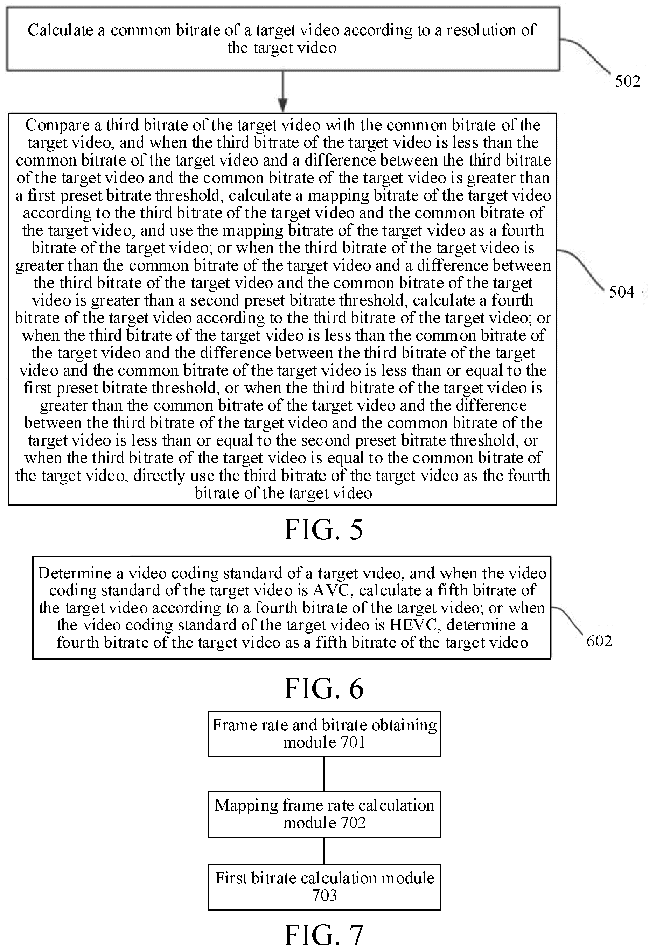

Based on Embodiment 3, as shown in FIG. 5, the video bitrate calculation method further includes step 502 to step 504.

Step 502: Calculate a common bitrate of the target video according to the resolution of the target video.

The common bitrate of the target video is calculated by using the following formula: $Y = \sqrt[1.05]{W 1 ∗ G 1} ∗ \left(4+6∗d\right)$ (14).

*Y* is the common bitrate of the target video, *W*1 is a width value of the resolution of the target video, *G*1 is a height value of the resolution of the target video, and d is a bitrate level coefficient of the target video.

In this embodiment, the resolution of the target video is 888*666 pixels. Therefore, the width value *W*1 of the resolution of the target video that may be obtained is 888, and the height value *G*1 of the resolution of the target video is 666. In this embodiment, the bitrate level coefficient d of the target video is 0.5. The width value *W*1 of 888 of the resolution of the target video, the height value *G*1 of 666 of the resolution of the target video, and the bitrate level coefficient d of 0.5 of the target video are substituted into the formula (14), and the common bitrate Y of the target video that may be calculated is 2130055 bps (namely, 2.03 Mbps).

The formula (14) in this embodiment is derived by the inventor through a large amount of test data.

Step 504: Compare the third bitrate of the target video with the common bitrate of the target video, and when the third bitrate of the target video is less than the common bitrate of the target video and a difference between the third bitrate of the target video and the common bitrate of the target video is greater than a first preset bitrate threshold, calculate a mapping bitrate of the target video according to the third bitrate of the target video and the common bitrate of the target video, and use the mapping bitrate of the target video as a fourth bitrate of the target video; or when the third bitrate of the target video is greater than the common bitrate of the target video and a difference between the third bitrate of the target video and the common bitrate of the target video is greater than a second preset bitrate threshold, calculate a fourth bitrate of the target video according to the third bitrate of the target video, or when the third bitrate of the target video is less than or equal to the common bitrate of the target video and the difference between the third bitrate of the target video and the common bitrate of the target video is less than or equal to the second preset bitrate threshold, directly use the third bitrate of the target video as the fourth bitrate of the target video.

The mapping bitrate of the target video is calculated according to the third bitrate of the target video and the common bitrate of the target video by using the following formulas: $L 3 = 2 ∗ Y 3 - \frac{Y {3}^{2}}{Y}$ (15); $M 3 = 2 ∗ L 3 - \frac{L {3}^{2}}{Y}$ (16); $H 3 = 2 ∗ M 3 - \frac{M {3}^{2}}{Y}$ (17); and $F 3 = \left\{\begin{matrix}L 3 + 2 ∗ d ∗ \left(M3-L3\right) , d < 0.5 \\ M 3 + 2 ∗ \left(d-0.5\right) \left(H3-M3\right) , d \geq 0.5\end{matrix}\right.$ (18).

*Y3* is the third bitrate of the target video, *Y* is he common bitrate of the target video, L3 is a low-level bitrate, M3 is a middle-level bitrate, H3 is a high-level bitrate, d is a bitrate level coefficient of the target video, and F3 is the mapping bitrate of the target video.

The fourth bitrate of the target video is calculated according to the third bitrate of the target video by using the following formula: $Y 4 = 0.7 ∗ Y 3$ (19).

Y4 is the fourth bitrate of the target video, and Y3 is the third bitrate of the target video.

In this embodiment, the common bitrate *Y* of the target video is 2.03 Mbps (namely, 2130055 bps), and the third bitrate Y3 of the target video is 3.98 Mbps (namely, 4173332 bps). In addition, the first preset bitrate threshold in this embodiment may be 2000000 bps, and the second preset bitrate threshold may also be 2000000 bps.

Specifically, the third bitrate Y3 (namely, 4173332 bps) of the target video is greater than the common bitrate *Y* (namely, 2130055 bps) of the target video , and the difference (namely, 2043277 bps) between the third bitrate of the target video and the common bitrate of the target video is greater than the second preset bitrate threshold. Therefore, the fourth bitrate of the target video needs to be calculated by using the formula (19). The third bitrate Y3 of 3.98 Mbps of the target video is substituted into the formula (19), to obtain that the fourth bitrate Y4 of 2.79 Mbps of the target video.

If a case in which the third bitrate of the target video is less than the common bitrate of the target video and the difference between the third bitrate of the target video and the common bitrate of the target video is greater than the first preset bitrate threshold occurs, the mapping bitrate of the target video needs to be calculated according to the third bitrate of the target video and the common bitrate of the target video, and then the mapping bitrate of the target video is used as the fourth bitrate of the target video.

For example, a third bitrate of a target video is 2000000 bps, and a corresponding common bitrate of the target video is 6000000 bps, and it is assumed that a first preset bitrate threshold is 2500000 bps. The third bitrate of the target video is less than the common bitrate of the target video, and a difference between the third bitrate of the target video and the common bitrate of the target video is greater than the first preset bitrate threshold.

In this case, the third bitrate Y3 of 2000000 bps of the target video and the common bitrate *Y* of 6000000 bps of the target video are substituted into the formula (15), and the low-level bitrate L3 that is calculated is 3333333.33 bps. Then, the low-level bitrate L3 of 3333333.33 bps and the common bitrate *Y* of 6000000 bps of the target video are substituted into the formula (16), and the middle-level bitrate M3 that is calculated is 4814814.81 bps. Next, the middle-level bitrate M3 of 4814814.81 bps and the common bitrate *Y* of 6000000 bps of the target video are substituted into the formula (17), and the high-level bit rate H3 that is calculated is 5765889.35 bps It is assumed that the bitrate level coefficient d of the target video herein is 0.6. Finally, the low-level bitrate L3, the middle-level bitrate M3, the high-level bitrate H3, and the bitrate level coefficient d are substituted into the formula (18), and the mapping bitrate F3 of the target video that is calculated is 5005029.72 bps (namely, 4.77 Mbps).

If the third bitrate of the target video is less than the common bitrate of the target video and the difference between the third bitrate of the target video and the common bitrate of the target video is less than or equal to the first preset bitrate threshold, or if the third bitrate of the target video is greater than the common bitrate of the target video and the difference between the third bitrate of the target video and the common bitrate of the target video is less than or equal to the second preset bitrate threshold, or if the third bitrate of the target video is equal to the common bitrate of the target video, the third bitrate of the target video is directly used as the fourth bitrate of the target video.

In this embodiment, a bitrate of the target video (namely, the fourth bitrate of the target video) continues to be calculated in a common bitrate dimension. The common bitrate of the target video is first calculated by using the resolution of the target video, then the third bitrate of the target video is compared with the common bitrate of the target video, and the fourth bitrate of the target video is determined according to a comparison result. When the fourth bitrate is calculated in this manner, the frame rate dimension, the upper bitrate limit dimension, and the resolution area ratio dimension are considered, and the common bitrate dimension is further considered. When the third bitrate of the target video has a large difference from the common bitrate of the target video, the fourth bitrate is close to the common bitrate in a linear or non-linear manner. Therefore, the calculated fourth bitrate is better, and finally, the produced target video has better quality. In other words, in this embodiment, the fourth bitrate of the target video is calculated in four dimensions: the frame rate, the upper bitrate limit, the resolution area ratio, and the common bitrate, so that the produced target video has better quality.

### Embodiment 5

Based on Embodiment 4, as shown in FIG. 6, the video bitrate calculation method further includes step 602.

Step 602: Determine a video coding standard of the target video, and when the video coding standard of the target video is HEVC, calculate a fifth bitrate of the target video according to the fourth bitrate of the target video; or when the video coding standard of the target video is AVC, determine the fourth bitrate of the target video as a fifth bitrate of the target video.

The video coding standard refers to a technical specification and algorithm used for compressing and encoding a digital video. A common video coding standard includes: AVC/H.264 (Advanced Video Coding): The AVC is a mature video coding standard, and is widely applied to fields such as online videos, blu-ray discs, and broadcast televisions. The AVC has good compression efficiency and wide device support. HEVC/H.265 (High Efficiency Video Coding): The HEVC is a subsequent standard of the H.264, has higher compression efficiency, and is applicable to high-definition and ultra-high-definition videos. The HEVC supports a higher resolution and frame rate, and gradually becomes a mainstream standard in the field of streaming media and video communication.

In this embodiment, the video coding standard of the target video is first determined. When the video coding standard of the target video is the HEVC, the fifth bitrate of the target video is calculated according to the following formula: $Y 5 = 0.75 ∗ Y 4$ (20).

Y5 is the fifth bitrate of the target video, and Y4 is the fourth bitrate of the target video.

Specifically, if in this embodiment, the video coding standard of the target video is the HEVC, the fourth bitrate Y4 of 2.79 Mbps of the target video is substituted into the formula (20), and finally, the fifth bitrate Y5 of the target video that is calculated is 2.79 Mbps.

If in this embodiment, the video coding standard of the target video is the AVC, in this embodiment, the fourth bitrate of the target video may be directly determined as the fifth bitrate of the target video, that is, the fifth bitrate Y5 of the target video is 2.79 Mbps.

Usually, the video coding standard of the target video uses the AVC. If the video coding standard of the target video uses the AVC, the fourth bitrate of the target video is directly determined as the fifth bitrate of the target video. In addition, In a same definition, a bitrate required by the video coding standard HEVC may be lower than a bitrate required by the video coding standard AVC. Therefore, when the video coding standard of the target video is the HEVC, the bitrate of the target video may be linearly reduced based on the fourth bitrate, to obtain the fifth bitrate of the target video.

In this embodiment, a bitrate of the target video (namely, the fifth bitrate of the target video) continues to be calculated in a video coding standard dimension. The video coding standard of the target video is first determined. If the video coding standard of the target video is the HEVC, the bitrate of the target video may be linearly reduced based on the fourth bitrate to obtain the fifth bitrate of the target video, so that a finally obtained bitrate of the target video is more appropriate. In other words, in this embodiment, the fifth bitrate, which is calculated in five dimensions, that is, the frame rate, the upper bitrate limit, the resolution area ratio, the common bitrate, and the video coding standard, of the target video is most appropriate for producing the target video.

### Embodiment 6

A video bitrate calculation system uses the video bitrate calculation method in Embodiment 1. As shown in FIG. 7, the video bitrate calculation system of this embodiment includes: a frame rate bitrate obtaining module 701, a mapping frame rate calculation module 702, and a first bitrate calculation module 703. The frame rate obtaining module 701 is configured to: obtain a frame rate and a bitrate that are of a source video, and obtain a frame rate of a target video. The mapping frame rate calculation module 702 is configured to calculate a mapping frame rate of the target video according to the frame rate of the source video and the frame rate of the target video. The first bitrate calculation module 703 is configured to calculate a first bitrate of the target video according to the mapping frame rate of the target video and the frame rate and the bitrate that are of the source video.

The mapping frame rate calculation module 702 uses the following formulas: $L 1 = 2 ∗ x 1 - \frac{x {1}^{2}}{E 1}$ (1); $M 1 = 2 ∗ L 1 - \frac{L {1}^{2}}{E 1}$ (2); $H 1 = 2 ∗ M 1 - \frac{M {1}^{2}}{E 1}$ (3); and $F 1 = \left\{\begin{matrix}L 1 + 2 ∗ d ∗ \left(M1-L1\right) , d < 0.5 \\ M 1 + 2 ∗ \left(d-0.5\right) \left(H1-M1\right) , d \geq 0.5\end{matrix}\right.$ (4).

*x*1 is the frame rate of the target video, *E*1 is the frame rate of a source video, *L*1 is a low-level frame rate, M1 is a middle-level frame rate, H1 is a high-level frame rate, d is a bitrate level coefficient of the target video, and *F*1 is the mapping frame rate of the target video.

The first bitrate calculation module 703 uses the following formula: $Y 1 = F 1 ∗ \frac{A 1}{E 1}$ (5).

*Y*1 is the first bitrate of the target video, *F*1 is the mapping frame rate of the target video, *A*1 is the bitrate of the source video, and *E*1 is the frame rate of the source video.

### Embodiment 7

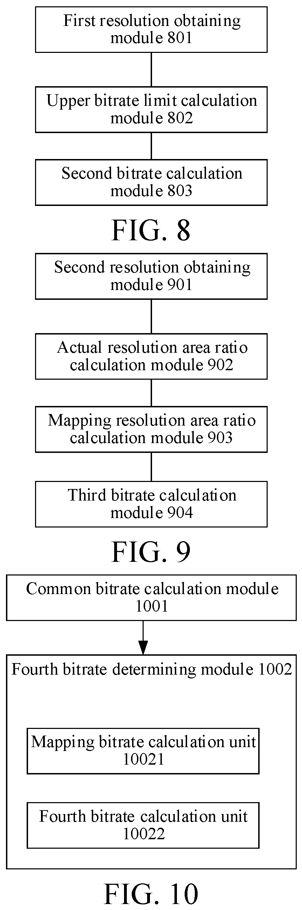

A video bitrate calculation system uses the video bitrate calculation method in Embodiment 2. As shown in FIG. 8, the video bitrate calculation system of this embodiment further includes: a first resolution obtaining module 801, an upper bitrate limit calculation module 802, and a second bitrate calculation module 803. The first resolution obtaining module 801 is configured to obtain a resolution of the target video. The upper bitrate limit calculation module 802 is configured to calculate an upper bitrate limit of the target video according to the resolution of the target video. The second bitrate calculation module 803 is configured to determine a second bitrate of the target video according to the upper bitrate limit of the target video and the first bitrate of the target video.

The upper-limit bitrate calculation module 802 uses the following formula: $Ymax = 4 ∗ 3.29 ∗ W 1 ∗ G 1$ (6).

*Ymax* is the upper bitrate limit of the target video, *W*1 is a width value of the resolution of the target video, and *G*1 is a height value of the resolution of the target video.

The second bitrate calculation module 803 uses the following formula: $Y 2 = \left\{\begin{matrix}Y 1 , Y 1 < Ymax \\ Ymax , Y 1 \geq Ymax\end{matrix}\right.$ (7).

Y2 is the second bitrate of the target video, *Y*1 is the first bitrate of the target video, and *Ymax* is the upper bitrate limit of the target video.

### Embodiment 8

A video bitrate calculation system uses the video bitrate calculation method in Embodiment 3. As shown in FIG. 9, the video bitrate calculation system of this embodiment further includes: a second resolution obtaining module 901, an actual resolution area ratio calculation module 902, a mapping resolution area ratio calculation module 903, and a third bitrate calculation module 904. The second resolution obtaining module 901 is configured to obtain a resolution of the source video. The actual resolution area ratio calculation module 902 is configured to calculate an actual resolution area ratio according to the resolution of the source video and the resolution of the target video. The mapping resolution area ratio calculation module 903 is configured to calculate a mapping resolution area ratio according to the actual resolution area ratio and an expected resolution area ratio. The third bitrate calculation module 904 is configured to calculate a third bitrate of the target video according to the mapping resolution area ratio and the second bitrate of the target video.

The actual resolution area ratio calculation module 902 uses the following formula: $x 2 = \frac{W 1 ∗ G 1}{W 2 ∗ G 2}$ (8).

x2 is the actual resolution area ratio, *W*1 is a width value of the resolution of the target video, *G*1 is a height value of the resolution of the target video, W2 is a width value of the resolution of the source video, and G2 is a height value of the resolution of the source video.

When the actual resolution area ratio is less than 1, the mapping resolution area ratio calculation module 903 uses the following formulas: $L 2 = 2 ∗ x 2 - \frac{x {2}^{2}}{E 2}$ (9); $M 2 = 2 ∗ L 2 - \frac{L {2}^{2}}{E 2}$ (10); $H 2 = 2 ∗ M 2 - \frac{M {2}^{2}}{E 2}$ (11); and $F 2 = \left\{\begin{matrix}L 2 + 2 ∗ d ∗ \left(M2-L2\right) , d < 0.5 \\ M 2 + 2 ∗ \left(d-0.5\right) \left(H2-M2\right) , d \geq 0.5\end{matrix}\right.$ (12).

*x2* is the actual resolution area ratio, E2 is the expected resolution area ratio, *L2* is a low-level resolution area ratio, *M2* is a middle-level resolution area ratio, *H2* is a high-level resolution area ratio, d is a bitrate level coefficient of the target video, and F2 is the mapping resolution area ratio.

When the actual resolution area ratio is greater than or equal to 1, the mapping resolution area ratio calculation module 903 uses the following formula: $F 2 = \sqrt[1.2]{x 2}$ (21).

x2 is the actual resolution area ratio, and F2 is the mapping resolution area ratio.

The third bitrate calculation module 904 uses the following formula: $Y 3 = F 2 ∗ Y 2$ (13).

Y3 is the third bitrate of the target video, F2 is the mapping resolution area ratio, and Y2 is the second bitrate of the target video.

### Embodiment 9

A video bitrate calculation system uses the video bitrate calculation method in Embodiment 4. As shown in FIG. 10, the video bitrate calculation system of this embodiment further includes: a common bitrate calculation module 1001 and a fourth bitrate determining module 1002. The common bitrate calculation module 1001 is configured to calculate a common bitrate of the target video according to the resolution of the target video. The fourth bitrate determining module 1002 is configured to: compare the third bitrate of the target video with the common bitrate of the target video, and when the third bitrate of the target video is less than the common bitrate of the target video and a difference between the third bitrate of the target video and the common bitrate of the target video is greater than a first preset bitrate threshold, calculate a mapping bitrate of the target video according to the third bitrate of the target video and the common bitrate of the target video, and use the mapping bitrate of the target video as a fourth bitrate of the target video; or when the third bitrate of the target video is greater than the common bitrate of the target video and a difference between the third bitrate of the target video and the common bitrate of the target video is greater than a second preset bitrate threshold, calculate the fourth bitrate of the target video according to the third bitrate of the target video; or when the third bitrate of the target video is less than the common bitrate of the target video and the difference between the third bitrate of the target video and the common bitrate of the target video is less than or equal to the first preset bitrate threshold, or when the third bitrate of the target video is greater than the common bitrate of the target video and the difference between the third bitrate of the target video and the common bitrate of the target video is less than or equal to the second preset bitrate threshold, or if the third bitrate of the target video is equal to the common bitrate of the target video, directly use the third bitrate of the target video as the fourth bitrate of the target video.

Generally, the common bitrate calculation module 1001 uses the following formula: $Y = \sqrt[1.05]{W 1 ∗ G 1} ∗ \left(4+6∗d\right)$ (14).

*Y* is the common bitrate of the target video, *W*1 is a width value of the resolution of the target video, *G*1 is a height value of the resolution of the target video, and d is a bitrate level coefficient of the target video.

The fourth bitrate determining module 1002 includes a mapping bitrate calculation unit 10021. The mapping bitrate calculation unit 10021 uses the following formulas: $L 3 = 2 ∗ Y 3 - \frac{Y {3}^{2}}{Y}$ (15); $M 3 = 2 ∗ L 3 - \frac{L {3}^{2}}{Y}$ (16); $H 3 = 2 ∗ M 3 - \frac{M {3}^{2}}{Y}$ (17); and $F 3 = \left\{\begin{matrix}L 3 + 2 ∗ d ∗ \left(M3-L3\right) , d < 0.5 \\ M 3 + 2 ∗ \left(d-0.5\right) \left(H3-M3\right) , d \geq 0.5\end{matrix}\right.$ (18).

*Y3* is the third bitrate of the target video, *Y* is the common bitrate of the target video, L3 is a low-level bitrate, M3 is a middle-level bitrate, H3 is a high-level bitrate, d is the bitrate level coefficient of the target video, and F3 is the mapping bitrate of the target video.

The fourth bitrate determining module 1002 further includes a fourth bitrate calculation unit 10022. The fourth bitrate calculation unit 10022 uses the following formula: $Y 4 = 0.7 ∗ Y 3$ (19).

Y4 is the fourth bitrate of the target video, and Y3 is the third bitrate of the target video.

### Embodiment 10

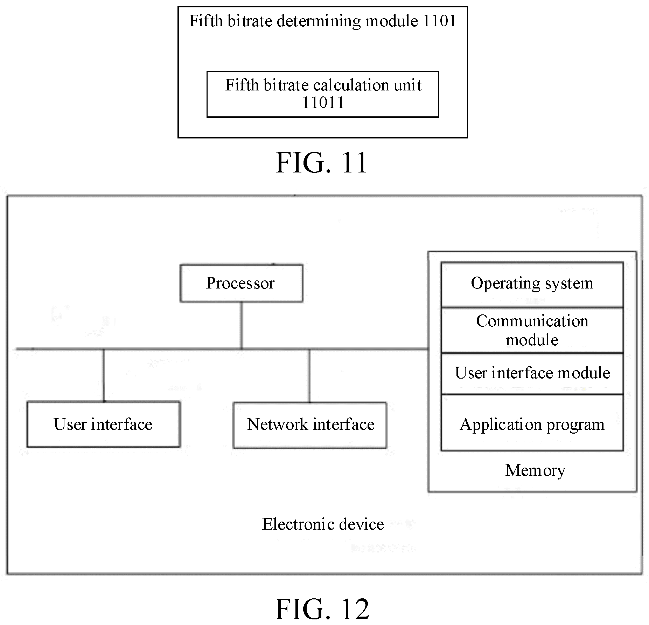

A video bitrate calculation system uses the video bitrate calculation method of Embodiment 5. As shown in FIG. 11, the video bitrate calculation system of this embodiment further includes: a fifth bitrate determining module 1101. The fifth bitrate determining module 1101 is configured to determine a video coding standard of the target video, and when the video coding standard of the target video is HEVC, calculate a fifth bitrate of the target video according to the fourth bitrate of the target video; or when the video coding standard of the target video is AVC, determine the fourth bitrate of the target video as a fifth bitrate of the target video.

The fifth bitrate determining module 1101 includes a fifth bitrate calculation unit 11011, and the fifth bitrate calculation unit 11011 uses the following formula: $Y 5 = 0.75 ∗ Y 4$ (20).

*Y5* is the fifth bitrate of the target video, and Y4 is the fourth bitrate of the target video.

### Embodiment 11

An electronic device, as shown in FIG. 12, includes a memory and a processor. The memory is configured to store a program. The processor is configured to run a program stored in the memory, to perform the method for calculating a video bitrate in Embodiment 1 or Embodiment 2 or Embodiment 3 or Embodiment 4 or Embodiment 5.

Specifically, the electronic device of this embodiment may include: at least one processor, at least one network interface, a user interface, a memory, and at least one communication bus.

The communication bus may be configured to implement connection and communication of the foregoing components.

The client interface may include a key. Optionally, the client interface may further include a standard wired interface and wireless interface.

The network interface may include, but is not limited to, a Bluetooth module, an NFC module, a Wi-Fi module, and the like.

The processor may include one or more processing cores. The processor is connected to various parts in the entire electronic device through various interfaces and lines, and by running or executing an instruction, a program, a code set, or an instruction set stored in the memory, and invoking data stored in the memory, the processor performs various functions of the routing device and processes data. Optionally, the processor may be implemented through at least one hardware form: a DSP, an FPGA, and a PLC. The processor may integrate one or a combination of several of a CPU, a GPU, and a modem. The CPU mainly processes an operating system, a client interface, an application program, and the like. The GPU is configured to be responsible for rendering and drawing content that needs to be displayed on a display screen. The modem is configured to process wireless communication. It may be understood that, the foregoing modem may alternatively not be integrated into a processor, and may be implemented through a chip alone.

The memory may include a RAM, or may include a ROM. Optionally, the memory includes a non-transitory computer readable medium. The memory may be configured to store an instruction, a program, code, a code set, or an instruction set. The memory may include a program storage region and a data storage region. The program storage area may store instructions used for implementing an operating system, instructions used for at least one function (such as a touch function, a sound playback function, and an image display function), instructions used for implementing the foregoing method embodiments, and the like. The data storage region may store data related to the foregoing method embodiments, and the like. Optionally, the memory may further be at least one storage apparatus that is located far away from the foregoing processor.

### Embodiment 12

A computer-readable storage medium, where a computer program instruction is stored, and the computer program instruction, when performed by a processor, implements the video bitrate calculation method in Embodiment 1 or Embodiment 2 or Embodiment 3 or Embodiment 4 or Embodiment 5. When the components of the electronic device in Embodiment 11 are implemented in the form of software functional units and sold or used as independent products, the components may be stored in the computer-readable storage medium in this embodiment.

All or some of the foregoing embodiments may be implemented through software, hardware, firmware, or any combination thereof. When implemented through software, all or some of the steps may be implemented in a form of a computer program product. The computer program product includes one or more computer instructions. When the computer program instructions are loaded and executed on a computer, all or some of the processes or functions according to the embodiments of this specification are generated. The computer may be a general-purpose computer, a special-purpose computer, a computer network, or another programmable apparatus. The computer instructions may be stored in a computer readable storage medium or transmitted through a computer readable storage medium. A computer instruction may be transmitted from one website, computer, server, or data center to another website, computer, server, or data center in a wired (for example, a coaxial cable, an optical fiber, or a Digital Subscriber Line (Digital Subscriber Line, DSL)) or wireless (for example, infrared, radio, or microwave) manner. The computer readable storage medium may be any available medium that can be accessed by a computer, or a data storage device such as a server or a data center in which one or more available media are integrated. The available medium may be a magnetic medium (for example, a floppy disk, a hard disk, or a magnetic tape), an optical medium (for example, a Digital Versatile Disc (Digital Versatile Disc, DVD)), a semiconductor medium (for example, a Solid State Disk (Solid State Dis, SSD)), or the like.

A person of ordinary skill in the art may understand that all or some of the processes of the methods in the foregoing embodiments may be implemented by a computer program instructing relevant hardware. The program may be stored in a computer readable storage medium. When the program runs, the processes of the foregoing methods in the embodiments are performed. The foregoing storage medium includes: any medium that can store program code, such as a ROM, a RAM, a magnetic disk, or an optical disc. In a case of no conflict, technical features in this embodiment and implementation solutions may be randomly combined.

The foregoing descriptions are some embodiments of this specification, and are not intended to limit the scope of this specification. Various changes and improvements made by a person of ordinary skill in the art to the technical solutions of this specification without departing from the design spirit of this specification shall fall within the protection scope determined by the claims of this application.

## Claims

1. A video bitrate calculation method, comprising:
obtaining a frame rate and a bitrate that are of a source video, and obtaining a frame rate of a target video;
calculating a mapping frame rate of the target video according to the frame rate of the source video and the frame rate of the target video; and
calculating a first bitrate of the target video according to the mapping frame rate of the target video and the frame rate and the bitrate that are of the source video.

2. The video bitrate calculation method according to claim 1, wherein the mapping frame rate of the target video is calculated according to the frame rate of the source video and the frame rate of the target video by using the following formulas: $L 1 = 2 ∗ x 1 - \frac{x {1}^{2}}{E 1}$ (1); $M 1 = 2 ∗ L 1 - \frac{L {1}^{2}}{E 1}$ (2); $H 1 = 2 ∗ M 1 - \frac{M {1}^{2}}{E 1}$ (3); and $F 1 = \left\{\begin{matrix}L 1 + 2 ∗ d ∗ \left(M1-L1\right) , d < 0.5 \\ M 1 + 2 ∗ \left(d-0.5\right) \left(H1-M1\right) , d \geq 0.5\end{matrix}\right.$ (4),
wherein *x*1 is the frame rate of the target video, *E*1 is the frame rate of the source video, *L1* is a low-level frame rate, *M*1 is a middle-level frame rate, H1 is a high-level frame rate, *d* is a bitrate level coefficient of the target video, and *F*1 is the mapping frame rate of the target video; and
the first bitrate of the target video is calculated according to the mapping frame rate of the target video and the frame rate and the bitrate that are of the source video by using the following formula: $Y 1 = F 1 ∗ \frac{A 1}{E 1}$ (5),
wherein Y1 is the first bitrate of the target video, *F*1 is the mapping frame rate of the target video, *A*1 is the bitrate of the source video, and *E*1 is the frame rate of the source video.

3. The video bitrate calculation method according to claim 1, further comprising:
obtaining a resolution of the target video;
calculating an upper bitrate limit of the target video according to the resolution of the target video; and
determining a second bitrate of the target video according to the upper bitrate limit of the target video and the first bitrate of the target video.

4. The video bitrate calculation method according to claim 3, wherein the upper bitrate limit of the target video is calculated according to the resolution of the target video by using the following formula: $Ymax = 4 ∗ 3.29 ∗ W 1 ∗ G 1$ (6),
wherein *Ymax* is the upper bitrate limit of the target video, W1 is a width value of the resolution of the target video, and *G*1 is a height value of the resolution of the target video; and
the second bitrate of the target video is determined according to the upper bitrate limit of the target video and the first bitrate of the target video by using the following formula: $Y 2 = \left\{\begin{matrix}Y 1 , Y 1 < Ymax \\ Ymax , Y 1 \geq Ymax\end{matrix}\right.$ (7),
wherein Y2 is the second bitrate of the target video, Y1 is the first bitrate of the target video, and *Ymax* is the upper bitrate limit of the target video.

5. The video bitrate calculation method according to claim 3, further comprising:
obtaining a resolution of the source video;
calculating an actual resolution area ratio according to the resolution of the source video and the resolution of the target video;
calculating a mapping resolution area ratio according to the actual resolution area ratio and an expected resolution area ratio; and
calculating a third bitrate of the target video according to the mapping resolution area ratio and the second bitrate of the target video.

6. The video bitrate calculation method according to claim 5, wherein the actual resolution area ratio is calculated according to the resolution of the source video and the resolution of the target video by using the following formula: $x 2 = \frac{W 1 ∗ G 1}{W 2 ∗ G 2}$ (8),
wherein x2 is the actual resolution area ratio, *W*1 is a width value of the resolution of the target video, *G*1 is a height value of the resolution of the target video, W2 is a width value of the resolution of the source video, and G2 is a height value of the resolution of the source video;
when the actual resolution area ratio is less than 1, the mapping resolution area ratio is calculated according to the actual resolution area ratio and the expected resolution area ratio by using the following formulas: $L 2 = 2 ∗ x 2 - \frac{x {2}^{2}}{E 2}$ (9); $M 2 = 2 ∗ L 2 - \frac{L {2}^{2}}{E 2}$ (10); $H 2 = 2 ∗ M 2 - \frac{M {2}^{2}}{E 2}$ (11); and $F 2 = \left\{\begin{matrix}L 2 + 2 ∗ d ∗ \left(M2-L2\right) , d < 0.5 \\ M 2 + 2 ∗ \left(d-0.5\right) \left(H2-M2\right) , d \geq 0.5\end{matrix}\right.$ (12),
wherein x2 is the actual resolution area ratio, E2 is the expected resolution area ratio, *L2* is a low-level resolution area ratio, *M2* is a middle-level resolution area ratio, *H2* is a high-level resolution area ratio, d is a bitrate level coefficient of the target video, and F2 is the mapping resolution area ratio;
when the actual resolution area ratio is greater than or equal to 1, the mapping resolution area ratio is calculated according to the actual resolution area ratio by using the following formula: $F 2 = \sqrt[1.2]{x 2}$ (21),
wherein x2 is the actual resolution area ratio, and F2 is the mapping resolution area ratio; and
the third bitrate of the target video is calculated according to the mapping resolution area ratio and the second bitrate of the target video by using the following formula: $Y 3 = F 2 ∗ Y 2$ (13),
wherein Y3 is the third bitrate of the target video, F2 is the mapping resolution area ratio, and Y2 is the second bitrate of the target video.

7. The video bitrate calculation method according to claim 5, further comprising:
calculating a common bitrate of the target video according to the resolution of the target video; and
comparing the third bitrate of the target video with the common bitrate of the target video, and when the third bitrate of the target video is less than the common bitrate of the target video and a difference between the third bitrate of the target video and the common bitrate of the target video is greater than a first preset bitrate threshold, calculating a mapping bitrate of the target video according to the third bitrate of the target video and the common bitrate of the target video, and using the mapping bitrate of the target video as a fourth bitrate of the target video; or when the third bitrate of the target video is greater than the common bitrate of the target video and a difference between the third bitrate of the target video and the common bitrate of the target video is greater than a second preset bitrate threshold, calculating a fourth bitrate of the target video according to the third bitrate of the target video, or when the third bitrate of the target video is less than the common bitrate of the target video and the difference between the third bitrate of the target video and the common bitrate of the target video is less than or equal to the first preset bitrate threshold, or when the third bitrate of the target video is greater than the common bitrate of the target video and the difference between the third bitrate of the target video and the common bitrate of the target video is less than or equal to the second preset bitrate threshold, or when the third bitrate of the target video is equal to the common bitrate of the target video, directly using the third bitrate of the target video as the fourth bitrate of the target video.

8. The video bitrate calculation method according to claim 7, wherein the common bitrate of the target video is calculated according to the resolution of the target video by using the following formula: $Y = \sqrt[1.05]{W 1 ∗ G 1} ∗ \left(4+6∗d\right)$ (14),
wherein *Y* is the common bitrate of the target video, W1 is a width value of the resolution of the target video, *G*1 is a height value of the resolution of the target video, and d is a bitrate level coefficient of the target video;
the mapping bitrate of the target video is calculated according to the third bitrate of the target video and the common bitrate of the target video by using the following formulas: $L 3 = 2 ∗ Y 3 - \frac{Y {3}^{2}}{Y}$ (15); $M 3 = 2 ∗ L 3 - \frac{L {3}^{2}}{Y}$ (16); $H 3 = 2 ∗ M 3 - \frac{M {3}^{2}}{Y}$ (17); and $F 3 = \left\{\begin{matrix}L 3 + 2 ∗ d ∗ \left(M3-L3\right) , d < 0.5 \\ M 3 + 2 ∗ \left(d-0.5\right) \left(H3-M3\right) , d \geq 0.5\end{matrix}\right.$ (18),
wherein Y3 is the third bitrate of the target video, *Y* is the common bitrate of the target video, L3 is a low-level bitrate, M3 is a middle-level bitrate, H3 is a high-level bitrate, d is the bitrate level coefficient of the target video, and F3 is the mapping bitrate of the target video; and
the fourth bitrate of the target video is calculated according to the third bitrate of the target video by using the following formula: $Y 4 = 0.7 ∗ Y 3$ (19),
wherein Y4 is the fourth bitrate of the target video, and Y3 is the third bitrate of the target video.

9. The video bitrate calculation method according to claim 7, further comprising:
determining a video coding standard of the target video, and when the video coding standard of the target video is HEVC, calculating a fifth bitrate of the target video according to the fourth bitrate of the target video; or when the video coding standard of the target video is AVC, determining the fourth bitrate of the target video as a fifth bitrate of the target video.

10. The video bitrate calculation method according to claim 9, wherein the fifth bitrate of the target video is calculated according to the fourth bitrate of the target video by using the following formula: $Y 5 = 0.75 ∗ Y 4$ (20), wherein Y5 is the fifth bitrate of the target video, and Y4 is the fourth bitrate of the target video.

11. A video bitrate calculation system, comprising:
a frame rate and bitrate obtaining module, configured to: obtain a frame rate and a bitrate that are of a source video, and obtain a frame rate of a target video;
a mapping frame rate calculation module, configured to calculate a mapping frame rate of the target video according to the frame rate of the source video and the frame rate of the target video; and
a first bitrate calculation module, configured to calculate a first bitrate of the target video according to the mapping frame rate of the target video and the frame rate and the bitrate that are of the source video.

12. The video bitrate calculation system according to claim 11, wherein the mapping frame rate calculation module uses the following formulas: $L 1 = 2 ∗ x 1 - \frac{x {1}^{2}}{E 1}$ (1); $M 1 = 2 ∗ L 1 - \frac{L {1}^{2}}{E 1}$ (2); $H 1 = 2 ∗ M 1 - \frac{M {1}^{2}}{E 1}$ (3); and $F 1 = \left\{\begin{matrix}L 1 + 2 ∗ d ∗ \left(M1-L1\right) , d < 0.5 \\ M 1 + 2 ∗ \left(d-0.5\right) \left(H1-M1\right) , d \geq 0.5\end{matrix}\right.$ (4),
wherein *x*1 is the frame rate of the target video, *E*1 is the frame rate of the source video, L1 is a low-level frame rate, *M*1 is a middle-level frame rate, *H*1 is a high-level frame rate, *d* is a bitrate level coefficient of the target video, and *F*1 is the mapping frame rate of the target video; and
the first bitrate calculation module uses the following formula: $Y 1 = F 1 ∗ \frac{A 1}{E 1}$ (5),
wherein Y1 is the first bitrate of the target video, *F*1 is the mapping frame rate of the target video, *A*1 is the bitrate of the source video, and *E*1 is the frame rate of the source video.

13. The video bitrate calculation system according to claim 11, further comprising:
a first resolution obtaining module, configured to obtain a resolution of the target video;
an upper bitrate limit calculation module, configured to calculate an upper bitrate limit of the target video according to the resolution of the target video; and
a second bitrate calculation module, configured to determine a second bitrate of the target video according to the upper bitrate limit of the target video and the first bitrate of the target video.

14. The video bitrate calculation system according to claim 13, wherein the upper bitrate limit calculation module uses the following formula: $Ymax = 4 ∗ 3.29 ∗ W 1 ∗ G 1$ (6),
wherein *Ymax* is the upper bitrate limit of the target video, W1 is a width value of the resolution of the target video, and *G*1 is a height value of the resolution of the target video; and
the second bitrate calculation module uses the following formula: $Y 2 = \left\{\begin{matrix}Y 1 , Y 1 < Ymax \\ Ymax , Y 1 \geq Ymax\end{matrix}\right.$ (7),
wherein Y2 is the second bitrate of the target video, *Y*1 is the first bitrate of the target video, and *Ymax* is the upper bitrate limit of the target video.

15. The video bitrate calculation system according to claim 13, further comprising:
a second resolution obtaining module, configured to obtain a resolution of the source video;
an actual resolution area ratio calculation module, configured to calculate an actual resolution area ratio according to the resolution of the source video and the resolution of the target video;
a mapping resolution area ratio calculation module, configured to calculate a mapping resolution area ratio according to the actual resolution area ratio and an expected resolution area ratio; and
a third bitrate calculation module, configured to calculate a third bitrate of the target video according to the mapping resolution area ratio and the second bitrate of the target video.

16. The video bitrate calculation system according to claim 15, wherein the actual resolution area ratio calculation module uses the following formula: $x 2 = \frac{W 1 ∗ G 1}{W 2 ∗ G 2}$ (8),
wherein x2 is the actual resolution area ratio, *W*1 is a width value of the resolution of the target video, *G*1 is a height value of the resolution of the target video, *W*2 is a width value of the resolution of the source video, and *G*2 is a height value of the resolution of the source video;
when the actual resolution area ratio is less than 1, the mapping resolution area ratio calculation module uses the following formulas: $L 2 = 2 ∗ x 2 - \frac{x {2}^{2}}{E 2}$ (9); $M 2 = 2 ∗ L 2 - \frac{L {2}^{2}}{E 2}$ (10); $H 2 = 2 ∗ M 2 - \frac{M {2}^{2}}{E 2}$ (11); and $F 2 = \left\{\begin{matrix}L 2 + 2 ∗ d ∗ \left(M2-L2\right) , d < 0.5 \\ M 2 + 2 ∗ \left(d-0.5\right) \left(H2-M2\right) , d \geq 0.5\end{matrix}\right.$ (12)
wherein x2 is the actual resolution area ratio, *E*2 is the expected resolution area ratio, *L2* is a low-level resolution area ratio, *M2* is a middle-level resolution area ratio, *H2* is a high-level resolution area ratio, d is a bitrate level coefficient of the target video, and F2 is the mapping resolution area ratio;
when the actual resolution area ratio is greater than or equal to 1, the mapping resolution area ratio calculation module uses the following formula: $F 2 = \sqrt[1.2]{x 2}$ (21),
wherein x2 is the actual resolution area ratio, and F2 is the mapping resolution area ratio; and
the third bitrate calculation module uses the following formula: $Y 3 = F 2 ∗ Y 2$ (13),
wherein *Y3* is the third bitrate of the target video, F2 is the mapping resolution area ratio, and Y2 is the second bitrate of the target video.

17. The video bitrate calculation system according to claim 15, further comprising:
a common bitrate calculation module, configured to calculate a common bitrate of the target video according to the resolution of the target video; and
a fourth bitrate determining module, configured to: compare the third bitrate of the target video with the common bitrate of the target video, and when the third bitrate of the target video is less than the common bitrate of the target video and a difference between the third bitrate of the target video and the common bitrate of the target video is greater than a first preset bitrate threshold, calculate a mapping bitrate of the target video according to the third bitrate of the target video and the common bitrate of the target video, and use the mapping bitrate of the target video as a fourth bitrate of the target video; or when the third bitrate of the target video is greater than the common bitrate of the target video and a difference between the third bitrate of the target video and the common bitrate of the target video is greater than a second preset bitrate threshold, calculate a fourth bitrate of the target video according to the third bitrate of the target video; or when the third bitrate of the target video is less than the common bitrate of the target video and the difference between the third bitrate of the target video and the common bitrate of the target video is less than or equal to the first preset bitrate threshold, or when the third bitrate of the target video is greater than the common bitrate of the target video and the difference between the third bitrate of the target video and the common bitrate of the target video is less than or equal to the second preset bitrate threshold, or when the third bitrate of the target video is equal to the common bitrate of the target video, directly use the third bitrate of the target video as the fourth bitrate of the target video.

18. The video bitrate calculation system according to claim 17, wherein the common bitrate calculation module uses the following formula: $Y = \sqrt[1.05]{W 1 ∗ G 1} ∗ \left(4+6∗d\right)$ (14),
wherein Yis the common bitrate of the target video, *W*1 is a width value of the resolution of the target video, *G*1 is a height value of the resolution of the target video, and d is a bitrate level coefficient of the target video;
the fourth bitrate determining module comprises a mapping bitrate calculation unit, and the mapping bitrate calculation unit uses the following formulas: $L 3 = 2 ∗ Y 3 - \frac{Y {3}^{2}}{Y}$ (15); $M 3 = 2 ∗ L 3 - \frac{L {3}^{2}}{Y}$ (16); $H 3 = 2 ∗ M 3 - \frac{M {3}^{2}}{Y}$ (17); and $F 3 = \left\{\begin{matrix}L 3 + 2 ∗ d ∗ \left(M3-L3\right) , d < 0.5 \\ M 3 + 2 ∗ \left(d-0.5\right) \left(H3-M3\right) , d \geq 0.5\end{matrix}\right.$ (18),
wherein *Y3* is the third bitrate of the target video, *Y* is the common bitrate of the target video, L3 is a low-level bitrate, M3 is a middle-level bitrate, H3 is a high-level bitrate, d is the bitrate level coefficient of the target video, and F3 is the mapping bitrate of the target video; and
the fourth bitrate determining module further comprises a fourth bitrate calculation unit, and the fourth bitrate calculation unit uses the following formula: $Y 4 = 0.7 ∗ Y 3$ (19),
wherein Y4 is the fourth bitrate of the target video, and Y3 is the third bitrate of the target video.

19. The video bitrate calculation system according to claim 17, further comprising:
a fifth bitrate determining module, configured to determine a video coding standard of the target video, and when the video coding standard of the target video is HEVC, calculate a fifth bitrate of the target video according to the fourth bitrate of the target video; or when the video coding standard of the target video is AVC, determine the fourth bitrate of the target video as a fifth bitrate of the target video.

20. The video bitrate calculation system according to claim 19, wherein the fifth bitrate determining module comprises a fifth bitrate calculation unit, and the fifth bitrate calculation unit uses the following formula: $Y 5 = 0.75 ∗ Y 4$ (20), wherein Y5 is the fifth bitrate of the target video, and Y4 is the fourth bitrate of the target video.

21. An electronic device, comprising:
a memory, configured to store a program;
a processor, configured to run the program stored in the memory, to perform the video bitrate calculation method according to any one of claims 1 to 10.

22. A computer-readable storage medium, having computer program instructions are stored therein, wherein the computer program instructions, when performed by a processor, implement the video bitrate calculation method according to any one of claims 1 to 10.
